# EUROPEAN PATENT SPECIFICATION

(11) **EP 0 456 260 B1**
(45) Date of publication and mention of the grant of the patent: **12.02.1997**
(21) Application number: 91107633.9
(22) Date of filing: 10.05.1991
(51) Int. Cl.: H04M 1/274, H04N 1/32

(54) **A dialing system for automatically setting an abbreviated code**
Fernsprechwählsystem mit automatischer Aufstellung eines Kurzwahlcodes
Système de numérotation téléphonique permettant de définir automatiquement un code abrégé

(30) Priority: 11.05.1990 JP 121897/90; 11.05.1990 JP 121898/90; 11.05.1990 JP 121899/90; 11.05.1990 JP 121900/90
(43) Date of publication of application: 13.11.1991
(73) Proprietor: SHARP KABUSHIKI KAISHA, Osaka 545 (JP)
(72) Inventor: Kotani, Matahira, Ikoma-gun, Nara-ken (JP)
(74) Representative: TER MEER - MÜLLER - STEINMEISTER & PARTNER

(56) References cited:
- EP-A- 0 206 391
- EP-A- 0 244 869
- DE-A- 3 439 867
- US-A- 4 447 676
- PATENT ABSTRACTS OF JAPAN vol. 5, no. 44 (E-50)(716) 24 March 1981 & JP-A-56 000 765
- NACHRICHTEN ELEKTRONIK vol. 34, no. 11, 1980, HEIDELBERG pages 382 - 386 WESOLOWSKI 'EIN MIKROCOMPUTERGESTEUERTES TASTWAHLTELEFON'

## Description

### 1. Field of the Invention:

The present invention relates to a dialing system in accordance with the precharacterizing part of claim 1. Such a dialing system is known from DE-A-3439 867.

### 2. Description of the Prior Art:

When communication is to be done through a communication line, it is first necessary to dial a number to call the other party on the line. In an apparatus provided with a push-button dialing device, the dialing is accomplished by entering a dial number of the desired destination station through a keyboard to send out a dial signal to the communication line.

Most of recent push-button dialing devices are provided with an abbreviated dialing function. Namely, a code is previously allocated to a desired dial number by operating a keyboard of a dialing device. Hereinafter, such a code is referred to as "an abbreviated code". When an abbreviated code is entered through a keyboard, the dial number to which the code is previously allocated is automatically sent out to the telephone line. When dialing a number which has not been preset for abbreviated dialing, however, it is necessary to enter the full dial number each time the need arises to dial the number.

In this way, any dial number which has been preset for abbreviated dialing can be dialed by simply entering an abbreviated code, eliminating the necessity for entering the full dial number. However, the use of the abbreviated dialing function necessitates the preset of each abbreviated code which requires a rather complicated key operation.

DE-A-3439867 discloses an automatic dialing system for facsimile devices. An input means including digit keys for inputting a number is connected to the automatic dialing system. A dialing number memory stores specific dialing numbers of addressees which are called frequently, said specific dialing numbers also including abbreviated codes wherein said abbreviated codes are allocated respectively to the stored dialing numbers. The known automatic dialing apparatus also includes control means for controlling the operation of the system in response to data stored in a program memory and dial pulse generating means for generating dialing pulses corresponding to the stored dialing number. However, DE-A-3439 867 neither discloses nor suggests automatic storage of dial numbers in association with an abbreviated code.

### SUMMARY OF THE INVENTION

According to the present invention, a dialing system comprises:
input means including digit keys for inputting a number;
first memory means for storing at least one dial number input from said input means;
second memory means for storing dial numbers and abbreviated codes, said abbreviated codes allocated respectively to said dial numbers stored in said second memory means;
control means connected at least to said first memory means and said second memory means;
characterized in that
said control means has determining means for determining whether or not said dial number stored in said first memory means is equal to one of said dial numbers stored in said second memory means when a dial number is stored in said first memory means, and said control means has memory writing means for storing said dial number into said second memory means when it is determined that said dial number stored in said first memory means is not equal to any one of said dial numbers stored in said second memory means. (Claim 1)

Preferably, said system further comprises display means for, when an abbreviated code is input, displaying at least the dial number corresponding to said input abbreviated code.

Preferably, said system further comprises output means for printing said dial numbers and abbreviated codes stored in said second memory means.

Preferably, said control means searches said second memory means for an empty area, and writes said dial number stored in said first memory means into said empty area of said second memory means.

Further, the dialing system according to the invention comprises:
a transmission start key for activating said dial pulse generating means to generate a dial pulse
third memory means for storing at least one dial number;
second control means for, when a number is input through said input means, determining whether or not said input number equals the dial number stored in said third memory means, and for, when it is determined that said input number equals said dial number stored in said third memory means, activating said dial pulse generating means to generate a dial pulse corresponding to said dial number stored in said third memory means;
a direct dial key; and
third control means for, when said direct dial key is operated, activating said dial pulse generating means to generate a dial pulse corresponding to said dial number stored in said third memory means.

According to a further advantageous development, the dialing system according to the invention is further characterized in that said determining means determines whether or not said dial number stored in said first memory means is equal to one of said dial numbers stored in said second memory means when a dial number is stored in said first memory means during an operation for dialing said inputted dial number, and said memory writing means stores said dial number into said second memory means when it is determined that said dial number stored in said first memory means is not equal to any one of said dial numbers stored in said second memory means.

Thus, the invention described herein makes possible the objectives of:
(1) providing a dialing system which is easy to operate;
(2) providing a dialing system in which an abbreviated code can be automatically preset;
(3) providing a dialing system in which the operator can easily know stored abbreviated dial information such as abbreviated codes and dial numbers; and
(4) providing a dialing system in which, when an entered dial number is the predetermined one, the call is automatically initiated without performing any further key operation.

### BRIEF DESCRIPTION OF THE DRAWINGS

This invention may be better understood and its numerous objects and advantages will become apparent to those skilled in the art by reference to the accompanying drawings as follows:

Figure 1 is a block diagram illustrating an embodiment of the invention.

Figure 2 is a flowchart illustrating the operation of the embodiment of Figure 1.

Figure 3 is a flowchart illustrating the operation of another embodiment of the invention.

Figure 4 is a block diagram illustrating a further embodiment of the invention.

Figure 5 is a flowchart illustrating the operation of the embodiment of Figure 4.

### DESCRIPTION OF THE PREFERRED EMBODIMENTS

Preferred embodiments of the invention which are employed in a facsimile apparatus will be described with reference to the attached drawings.

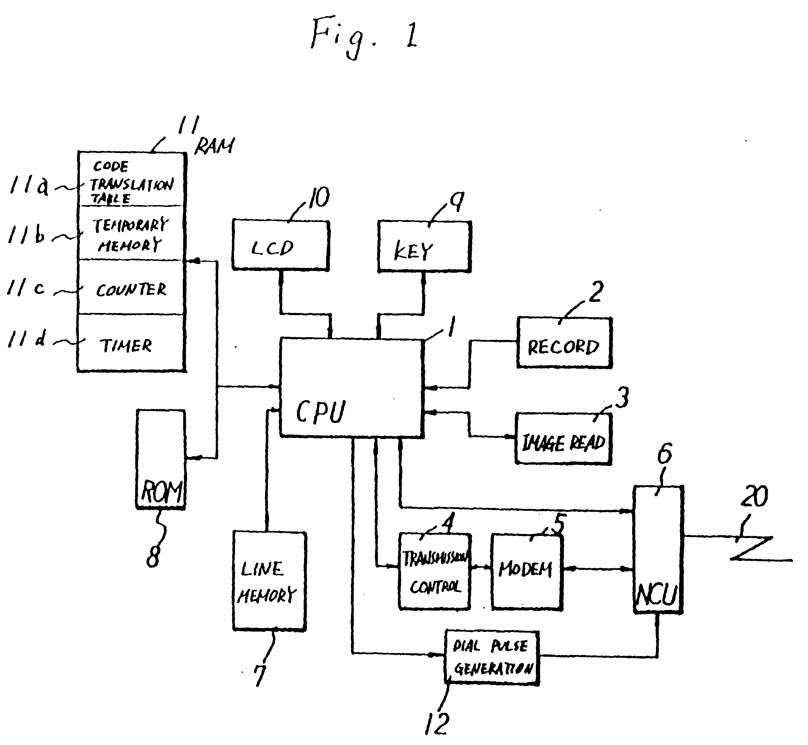

Figure 1 is a block diagram of a facsimile apparatus in which a dialing system according to the invention is incorporated. The facsimile apparatus of Figure 1 comprises a controller (CPU) 1 which controls each components of the apparatus in accordance with programs stored in a ROM 8, a recording unit 2 for recording received image information, an image reading unit 3 for reading a document to be transmitted, a transmission control circuit 4, a modem 5, a network control unit (NCU) 6 connected to a communication line 20, and a line memory 7 for storing image information of a few lines which has been received or is to be transmitted.

Received signals having compressed image information are supplied to the CPU 1 via the modem 5 and the transmission control circuit 4, and then temporarily stored in the line memory 7. The run length codes of the stored signals are decoded, and developed into the form of image signals which are in turn supplied to the recording unit 2 to be printed on a paper sheet.

Image information on an original to be transmitted is temporarily stored in the line memory 7, and converted into run length codes. The run length codes are encoded, and then sent to the communication line 20 through the transmission control circuit 4, the modem 5 and the NCU 6.

The facsimile apparatus further comprises a keyboard 9, a liquid crystal display (LCD) unit 10, a rewritable memory (i.e., a RAM) 11, and a dial pulse generation circuit 12. The keyboard 9 is provided with digit keys and function keys. The function keys include a transmission start key. When the transmission start key is operated, the facsimile transmission through the communication line 20 is initiated (more specifically, a dial pulse is generated to call the destination station). The digit keys are used for dialing operations (manual dialing operation and abbreviated dialing operation). The RAM 11 has several areas for abbreviated dialing operation: an abbreviated code translation table 11a; a temporary memory area 11b; a counter area 11c; and a timer area 11d. The counter area 11c stores the number of calls, and the timer area 11d stores a predetermined number of pulses which corresponds to a prefixed period of time (in this embodiment, three minutes). The number stored in the counter area 11c is used in the counting of the number of recalls which are made at the interval of the prefixed period of time, when the destination station is busy. In this embodiment, the recall is made up to three times, and, when the destination station is still busy, the call is canceled. The RAM 11 is always powered so as to prevent its contents from being destroyed.

The code translation table 11a is a conversion table defining relationships between abbreviated codes and dial numbers. The temporary memory area 11b temporarily stores a dial number entered through the keyboard 9, until the communication is completed, or until the dial number is stored with related to an abbreviated code in the abbreviated code translation table 11a. When receiving a dial number which has been manually entered through the keyboard 9 or converted by the code translation table 11a, the dial pulse generation circuit 12 generates a dial pulse signal corresponding to the dial number, and sends it to the communication line 20.

The abbreviated code translation table 11a has a plurality of abbreviated code areas in each of which a full dial number is to be stored. When an abbreviated code is to be set, a code is entered through the keyboard 9, so that one of the abbreviated code areas is selected. Then, a full dial number to be registered is entered through the keyboard 9, and the dial number is stored in the selected area. The entered dial number is displayed on the LCD unit 10. The above procedures of setting abbreviated code translation table 11a may be the same as those used in a prior art dialing system.

According to the embodiment, when the operator enters the dial number of a destination station from the keyboard 9 in order to call the destination station, the entered dial number is supplied to the dial pulse generation circuit 12 to initiate the calling operation, and temporarily stored in the temporary memory area 11b of the RAM 11. The dial number is then determined as to whether or not it has been already stored in the abbreviated code translation table 11a. If it has not been stored yet, the dial number is stored as new abbreviated dial information in an empty area of the table 11a.

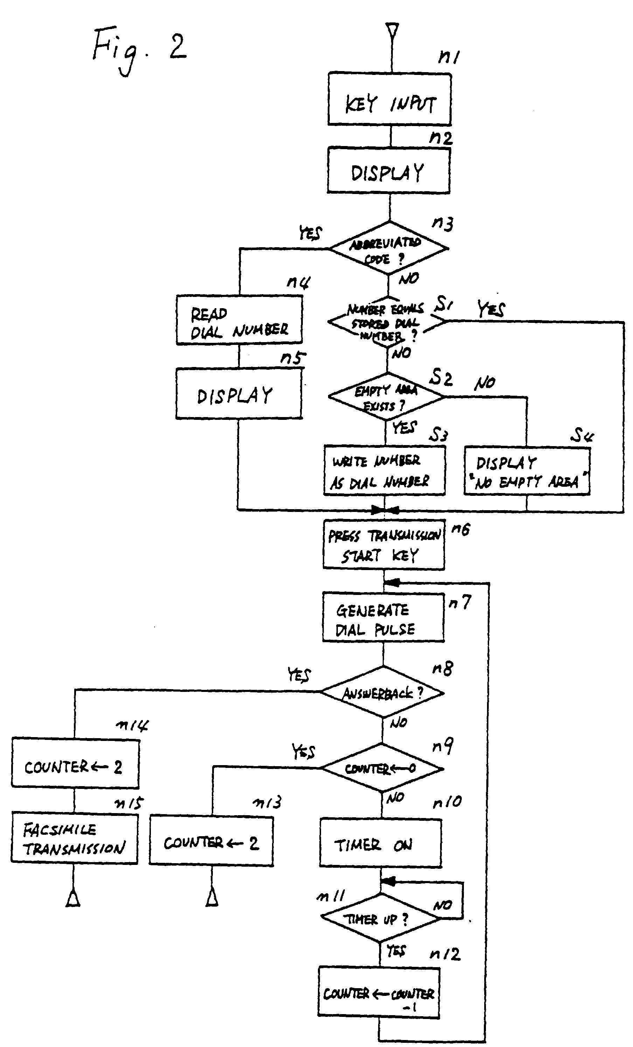

The operation of this embodiment will be described in more detail with reference to Figure 2.

When image information on an original is to be transmitted, the operator enters the dial number or abbreviated code of the destination station by pressing the digit keys on the keyboard 9 (step n1). More specifically, when entering a dial number, a given function key on the keyboard 9 designating the dial number entry is operated, followed by the entry of the dial number from the keyboard 9. On the other hand, when entering the abbreviated code, the above-mentioned function key is not operated, but a two-digit number is entered from the keyboard 9. The thus entered dial number or abbreviated code is displayed on the LCD unit 10 to enable the operator to check the entered number (step n2).

Next, it is determined whether or not the entered number is one of the abbreviated codes stored in the abbreviated code translation table 11a of the RAM 11 (step n3). If YES, the corresponding area in the abbreviated code translation table 11a is accessed to read out the preregistered full dial number from the area (step n4), and the dial number thus read out is displayed on the display 10 (step n5).

If it is determined in step n3 that the entered number is not equal to one of the abbreviated codes stored in the table 11a, the controller 1 checks the entered number in accordance with the programs stored in the ROM 8, to determine if the entered number is the one which has been already registered in the abbreviated code translation table 11a (step S1). If NO, the abbreviated code translation table 11a is searched for an empty area, and the dial number is stored therein (steps S2 and S3). If there is no empty area in the abbreviated code translation table 11a, the dial number is not stored, and a message is displayed on the LCD unit 10 to notify this to the operator (step S4).

When the operator presses the transmission start key after the dial number of the destination station is set as described above, the dial number read out in the above manner or the dial number directly entered is supplied to the dial pulse generation circuit 12 which in turn generates dial pulses corresponding to the dial number and sends them out to the line 20 (steps n6 and n7).

Thereafter, it is checked if an answerback signal (CED tone) is received from the destination station (step n8). If the answerback signal is not received, it is determined that the destination station is busy or does not answer, and the contents of the timer area 11d begins to be incremented (step n9 and n10). When the contents of the timer area 11d reaches the preset value (in this embodiment, three minutes), the contents of the counter area 11c (initially set to "2") are decremented by one (steps n11 and n12), and the process returns to step n7 to repeat the recall operation. If the answerback signal is still not received even when the contents of the counter area 11c is decreased to "0" (that is, at three retries), the call operation is canceled, and the counter area 11c is reset to "two" (step n13). It may be beneficial if a record or a notification is made accordingly. On the other hand, when the answerback signal is received, the process proceeds to step n14 in which the counter area 11c is reset to "two", and a usual procedure for facsimile transmission is performed (step n15).

According to the embodiment, an entered dial number is automatically set in the abbreviated code translation table 11a. When the destination station corresponding to this dial number is to be called again, the operator is required only to enter the abbreviated code allocated to this dial number. Therefore, it is not necessary to previously set a dial number for the abbreviated dialing function, resulting in the simplified operation of the dialing system.

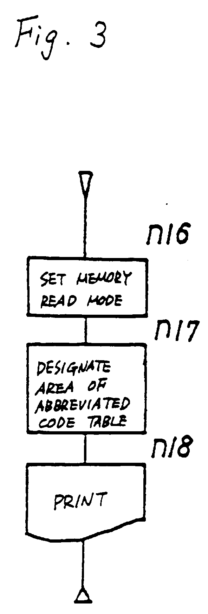

In another embodiment of the invention, abbreviated dial information stored in the abbreviated code translation table 11a can be easily printed out. The operation of this embodiment will be described with reference to Figure 3. When abbreviated dial information stored in the abbreviated code translation table 11a is to be printed out, the operator presses a function key of the keyboard 9 to set the memory read mode in which the contents of any desired area of the RAM 11 can be read out (step n16). Then, the operator designates one or more areas of the table 11a to be read out (step n17). The controller 1 sequentially reads out the contents of the desired areas of the abbreviated code translation table 11a, in accordance with the programs stored in the ROM 8. The read out contents are printed on a paper sheet by the recording unit 2 (step n18). Alternatively, the read out contents may be displayed on the LCD display unit 10.

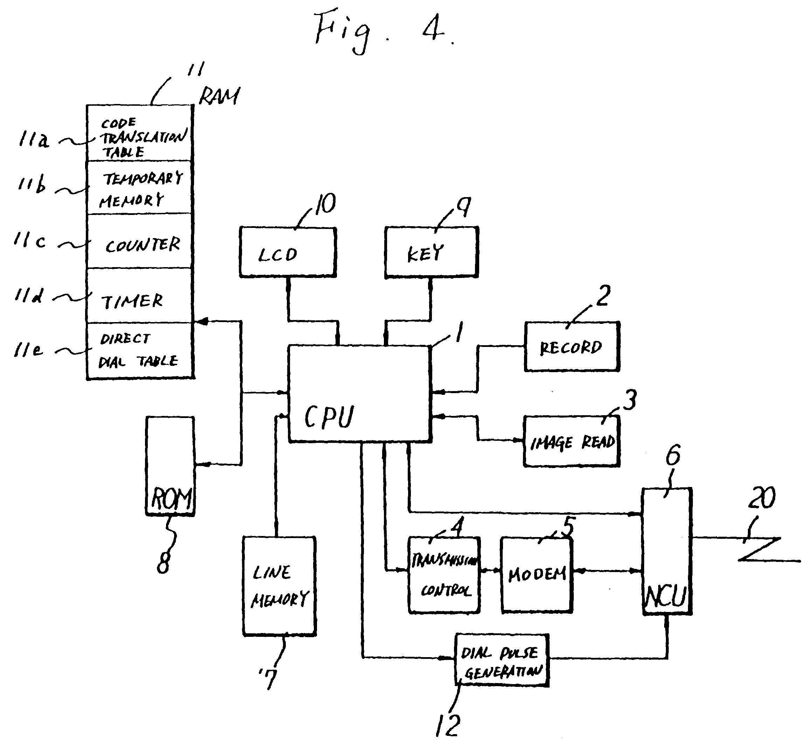

Figure 4 illustrates a further embodiment of the invention. This embodiment may be structured in the same manner as the embodiment shown in Figure 1, except that the RAM 11 further comprises a direct dial table 11e, and that the function keys of the keyboard 9 include a special key which is called "a direct dial key". The direct dial table 11e can store one dial number which may preferably be the dial number of the station most frequently called (hereinafter, the dial number is referred to as "the direct dial number"). (It will be apparent to those skilled in the art that the keyboard 9 may be provided with a plurality of direct dial keys, and that the direct dial table 11e may comprise a plurality of areas for storing direct dial numbers respectively corresponding to these direct dial keys.) A predetermined key operation enables the direct dial table 11e to be accessed, and by subsequently entering the direct dial number from the digit keys the direct dial number is stored in the direct dial table 11e. The thus stored direct dial number is displayed on the LCD unit 10.

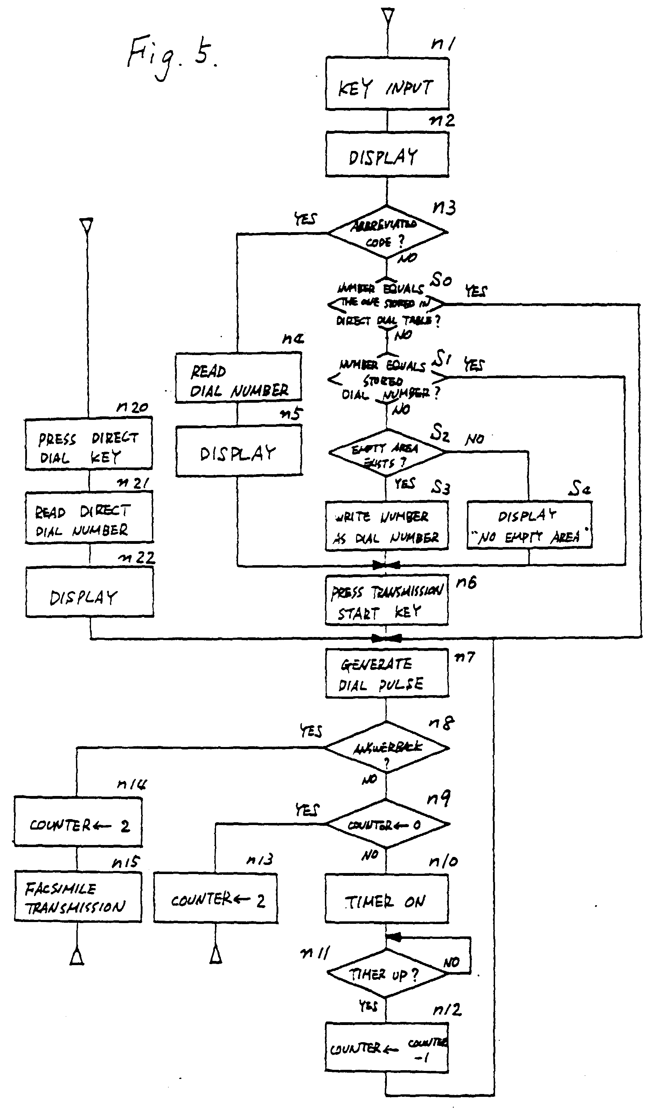

Figure 5 illustrates the operation of the embodiment of Figure 4. The process flow shown in Figure 5 differs from that shown in Figure 2 in that steps n20-n22 are added and step S0 is inserted between steps n3 and S1.

When facsimile transmission to the most frequently called remote station (i.e., the station corresponding to the direct dial number stored in the direct dial table 11e) is to be done, the operator presses the direct dial key (step n20). The direct dial table 11e is accessed to read out the direct dial number (step n21), and the read out direct dial number is displayed on the LCD unit 10 (step n22). Then, the process proceeds to step n7 in which the dial pulse corresponding to the direct dial number is generated. The procedures in the subsequent steps are the same as previously described. In the above case, the operator has only to press the direct dial key to automatically initiate facsimile transmission to the remote station. Therefore, the operator can leave the facsimile machine once the direct dial key is pressed. Also, the operator does not have to memorize the dial number of the remote station.

According to the embodiment of Figure 4, after step n3 in which it is determined whether or not the entered number is an abbreviated code, it is further determined in step S0 whether the entered number is the direct dial number or not. Namely, in step S0, the direct dial table 11e is retrieved to determine if the entered number equals the direct dial number stored in the table 11e. If the entered number equals the direct dial number, the process jumps steps S1-S4 and n6 to directly proceed to step n7 in which the dial pulse corresponding to the entered number is generated. It is possible that the embodiment is designed for performing the process described with reference to Figure 3.

Alternatively, the above-described embodiment may be modified so that, when it is determined in step n3 that the entered number equals one of the abbreviated codes stored in the abbreviated code translation table 11a of the RAM 11, the process jumps step n6 to directly proceed from step n5 to step n7. In this embodiment, when either the direct dial number or an abbreviated code is entered, a facsimile transmission is automatically started without pressing the transmission start key. This modification may be possible also in an embodiment which is not provided with the direct dial table 11e. In this case, when an abbreviated code is entered, a facsimile transmission is automatically started without pressing the transmission start key.

It is understood that various other modifications will be apparent to and can be readily made by those skilled in the art.

## Claims

1. A dialing system comprising:
input means (9) including digit keys for inputting a number;
first memory means (11b) for storing at least one dial number input from said input means (9);
second memory means (11a) for storing dial numbers and abbreviated codes, said abbreviated codes allocated respectively to said dial numbers stored in said second memory means;
control means (1) connected at least to said first memory means (11b) and said second memory means (11a);
characterized in that
said control means (1) has determining means for determining whether or not said dial number stored in said first memory means (11b) is equal to one of said dial numbers stored in said second memory means (11a) when a dial number is stored in said first memory means (11b), and said control means (1) has memory writing means for storing said dial number into said second memory means (11a) when it is determined that said dial number stored in said first memory means (11b) is not equal to any one of said dial numbers stored in said second memory means (11a).

2. The dialing system according to claim 1, wherein said system further comprises display means (10) for, when an abbreviated code is input from said input means (9), displaying at least the dial number corresponding to said input abbreviated code.

3. The dialing system according to claim 1, wherein said system further comprises output means (2) for printing said dial numbers and abbreviated codes stored in said second memory means.

4. The dialing system according to claim 1, wherein said control means (1) searches said second memory means (11a) for an empty area, and writes said dial number stored in said first memory means (11b) into said empty area of said second memory means (11a).

5. The dialing system according to one of the preceding claims, further comprises
a transmission start key for activating said dial pulse generating means (12) to generate a dial pulse
third memory means (11e) for storing at least one dial number;
second control means (1) for, when a number is input through said input means (9), determining whether or not said input number equals the dial number stored in said third memory means, and for, when it is determined that said input number equals said dial number stored in said third memory means, activating said dial pulse generating means to generate a dial pulse corresponding to said dial number stored in said third memory means (11e);
a direct dial key; and
third control means (1) for, when said direct dial key is operated, activating said dial pulse generating means (12) to generate a dial pulse corresponding to said dial number stored in said third memory means (11e).

6. The dialing system according to one of the claims 1 to 5, wherein said determining means determines whether or not said dial number stored in said first memory means (11b) is equal to one of said dial numbers stored in said second memory means (11a) when a dial number is stored in said first memory means (11b) during an operation for dialing said inputted dial number, and said memory writing means stores said dial number into said second memory means (11a) when it is determined that said dial number stored in said first memory means (11b) is not equal to any one of said dial numbers stored in said second memory means (11a).

## Patentansprüche

1. Wählsystem mit
einer Eingabeeinrichtung (9) mit Zifferntasten zur Eingabe einer Nummer;
einer Primär - Speichereinrichtung (11b) zur Speicherung von mindestens einer über diese Eingabe- Einrichtung (9) erfolgten Rufnummerneingabe;
einer Sekundär - Speichereinrichtung (11a) zur Speicherung von Rufnummern und von Kurzcodes, die diesen in der Speichereinrichtung gespeicherten Rufnummern jeweils zugeordnet sind;
einer Überwachungseinrichtung (1), die mindestens mit der Primär - Speichereinrichtung (11b) und der Sekundär - Einrichtung (11a) verbunden ist;
**dadurch gekennzeichnet, daß**
die Überwachungseinrichtung (1) sowohl verfügt über eine Ermittlungseinrichtung, die bei Rufnummerneingabe in die Primär - Speichereinrichtung (11b) ermittelt, ob die in der Primär - Speichereinrichtung (11b) abgespeicherte Rufnummer mit einer der in der Sekundär - Speichereinrichtung (11a) abgespeicherten Rufnummern übereinstimmt als auch über eine Speicher - Eintragungseinrichtung zur Abspeicherung der Rufnummer in der Sekundär - Speichereinrichtung (11a), nachdem ermittelt wurde, daß diese Rufnummer mit keiner der in der Sekundär - Speichereinrichtung (11a) abgespeicherten Rufnummern übereinstimmt.

2. Wählsystem gemäß Anspruch 1, weiterhin mit einer Anzeigeeinrichtung (10), die bei einer über die Eingabeeinrichtung (9) erfolgten Eingabe eines Kurzcodes mindestens die dem Kurzcode entsprechende Rufnummer anzeigt.

3. Wählsystem gemäß Anspruch 1 mit einer Ausgabeeinrichtung (2) zum Ausdruck der in der Sekundär - Speichereinrichtung abgespeicherten Rufnummern.

4. Wähleinrichtung gemäß Anspruch 1, worin die Überwachungseinrichtung (1) die Sekundär -Speichereinrichtung (11a) nach einem unbelegten Bereich absucht und darin die in der Primär -Speichereinrichtung (11b) abgespeicherte Rufnummer abspeichert.

5. Wählsystem gemäß einem der vorherigen Ansprüche, des weiteren mit
einer Übertragungs - Starttaste zur Aktivierung der Wählimpuls - Erzeugungseinrichtung (12) zur Erzeugung eines Wählimpulses;
einer dritten Speichereinrichtung (11e) zur Abspeicherung von mindestens einer Rufnummer;
einer Sekundär - Überwachungseinrichtung (11), die bei Eingabe einer Nummer über die Eingabeeinrichtung (9) ermittelt, ob diese eingegebene Nummer mit der in der dritten Speichereinrichtung abgespeicherten Rufnummer übereinstimmt und bei Feststellung der Übereinstimmung die Wählimpuls - Erzeugungseinrichtung zur Erzeugung eines Wählimpulses aktiviert, welcher der in der dritten Speichereinrichtung (11e) abgespeicherten Rufnummern entspricht;
einer Direktwahltaste; und
einer dritten Überwachungseinrichtung (1), die bei Betätigung der Direktwahltaste die Wählimpuls - Erzeugungseinrichtung (12) zur Erzeugung eines Wählimpulses entsprechend der in der dritten Speichereinrichtung (11e) abgespeicherten Ruf nummer aktiviert.

6. Wählsystem gemäß einem der Ansprüche 1 bis 5, worin einerseits die Ermittlungseinrichtung während des Wählens einer bestimmten Rufnummer feststellt, ob die dadurch in der Primär - Speichereinrichtung (11b) abgespeicherte Rufnummer mit einer der in der Sekundär - Speichereinrichtung (11a) abgespeicherten übereinstimmt und andererseits die Speicher - Eintragungseinrichtung diese Rufnummer in der Sekundär - Speichereinrichtung (11a) abspeichert, wenn Nicht - Übereinstimmung mit einer der in der Sekundär - Speichereinrichtung (11a) abgespeicherten Rufnummern festgestellt wird.

## Revendications

1. Système de numérotation comprenant :
un moyen d'introduction (9) incluant des touches numériques destinées à l'introduction d'un numéro;
un premier moyen de mémorisation (11b) destiné à l'enregistrement d'au moins un numéro d'appel introduit à partir dudit moyen d'introduction (9);
un second moyen de mémorisation (11a) destiné à l'enregistrement de numéros d'appel et de codes abrégés, lesdits codes abrégés étant associés respectivement auxdits numéros d'appel enregistrés dans ledit second moyen de mémorisation;
un moyen de commande (1) raccordé au moins audit premier moyen de mémorisation (11b) et audit second moyen de mémorisation (11a);
caractérisé en ce que
ledit moyen de commande (1) est doté d'un moyen de détermination destiné à déterminer si ledit numéro d'appel enregistré dans ledit premier moyen de mémorisation (11b) est égal à un desdits numéros d'appel enregistrés dans ledit second moyen de mémorisation (11a) lorsqu'un numéro d'appel est enregistré dans ledit premier moyen de mémorisation (11b), et ledit moyen de commande (1) est doté d'un moyen d'écriture en mémoire destiné à enregistrer ledit numéro d'appel dans ledit second moyen de mémorisation (11a) lorsqu'il est déterminé que ledit numéro d'appel enregistré dans ledit premier moyen de mémorisation (11b) n'est égal à aucun des numéros d'appel enregistrés dans ledit second moyen de mémorisation (11a).

2. Système de numérotation selon la revendication 1, dans lequel ledit système comporte en outre un moyen d'affichage (10) destiné, lorsqu'un code abrégé est introduit à partir dudit moyen d'introduction (9), à afficher au moins le numéro d'appel correspondant audit code abrégé introduit.

3. Système de numérotation selon la revendication 1, dans lequel ledit système comporte en outre un moyen de sortie (2) destiné à l'impression desdits numéros d'appel et codes abrégés enregistrés dans ledit second moyen de mémorisation.

4. Système de numérotation selon la revendication 1, dans lequel ledit moyen de commande (1) recherche une zone libre dans ledit second moyen de mémorisation (11a), et écrit ledit numéro d'appel enregistré dans ledit premier moyen de mémorisation (11b) dans ladite zone libre dudit second moyen de mémorisation (11a).

5. Système de numérotation selon une des revendications précédentes, comprenant en outre :
une touche de début de transmission destinée à activer ledit moyen de génération d'impulsion de numérotation (12) pour générer une impulsion de numérotation;
un troisième moyen de mémorisation (11e) destiné à l'enregistrement d'au moins un numéro d'appel;
un second moyen de commande (1) destiné, lorsqu'un numéro est introduit à l'aide dudit moyen d'introduction (9), à déterminer si oui ou non ledit numéro introduit est égal au numéro d'appel enregistré dans ledit troisième moyen de mémorisation, et destiné, lorsqu'il est déterminé que ledit numéro introduit est égal audit numéro d'appel enregistré dans ledit troisième moyen de mémorisation, à activer ledit moyen de génération d'impulsion de numérotation afin de générer une impulsion de numérotation correspondant audit numéro d'appel enregistré dans ledit troisième moyen de mémorisation (11e);
une touche de numérotation directe; et
un troisième moyen de commande (1) destiné, lorsque ladite touche de numérotation directe est actionnée, à activer ledit moyen de génération d'impulsion de numérotation (12) afin de générer une impulsion de numérotation correspondant audit numéro d'appel enregistré dans ledit troisième moyen de mémorisation (lle).

6. Système de numérotation selon une des revendications 1 à 5, dans lequel ledit moyen de détermination détermine si oui ou non ledit numéro d'appel enregistré dans ledit premier moyen de mémorisation (11b) est égal à un desdits numéros d'appel enregistrés dans ledit second moyen de mémorisation (11a) lorsqu'un numéro d'appel est enregistré dans ledit premier moyen de mémorisation (11b) au cours d'une opération de numérotation dudit numéro d'appel introduit, et ledit moyen d'écriture en mémoire enregistre ledit numéro d'appel dans ledit second moyen de mémorisation (11a) lorsqu'il est déterminé que ledit numéro d'appel enregistré dans ledit premier moyen de mémorisation (11b) n'est égal à aucun desdits numéros d'appel enregistrés dans ledit second moyen de mémorisation (11a).
